**Europäisches Patentamt**

**European Patent Office**

**Office européen des brevets**

(19)

(11) Veröffentlichungsnummer: **0 256 215 B1**

# (12) EUROPÄISCHE PATENTSCHRIFT

(45) Veröffentlichungstag der Patentschrift:
**14.08.91 Patentblatt 91/33**

(51) Int. Cl.$^5$: **B23K 35/22, B23K 35/40,**
**C22F 1/08**

(21) Anmeldenummer: **87106461.4**

(22) Anmeldetag: **05.05.87**

(54) **Verfahren zum Herstellen einer Elektrode zum Widerstandschweissen.**

(30) Priorität: **09.08.86 DE 3627022**

(43) Veröffentlichungstag der Anmeldung:
**24.02.88 Patentblatt 88/08**

(45) Bekanntmachung des Hinweises auf die
Patenterteilung:
**14.08.91 Patentblatt 91/33**

(84) Benannte Vertragsstaaten:
**BE DE ES FR NL SE**

(56) Entgegenhaltungen:
**DE-A- 2 808 392**
**DE-B- 1 165 876**
**DE-C- 3 310 423**
**FR-A- 1 555 181**
**US-A- 2 250 645**
**US-A- 3 143 442**

(56) Entgegenhaltungen:
**SCHWEISSEN UND SCHNEIDEN, Band 28, Nr.**
**1, Januar 1976, Seiten 19-23, Düsseldorf, DE;**
**H. GRAVEMANN: "Zur Frage der Elektroden-**
**werkstoffe für das Widerstandspressschweis-**
**sen"**

(73) Patentinhaber: **Licentia**
**Patent-Verwaltungs-GmbH**
**Theodor-Stern-Kai 1**
**W-6000 Frankfurt/Main 70 (DE)**

(72) Erfinder: **Durchschlag, Peter**
**Kölner Strasse 60 a**
**W-4330 Mülheim a.d.R (DE)**
Erfinder: **Wendland, Dieter**
**Bauvereinstrasse 43**
**W-4300 Essen 1 (DE)**

(74) Vertreter: **Lertes, Kurt, Dr. et al**
**Licentia Patent-Verwaltungs-GmbH**
**Theodor-Stern-Kai 1**
**W-6000 Frankfurt/M 70 (DE)**

## Beschreibung

Die Erfindung betrifft ein Verfahren zum Herstellen einer Elektrode bzw. einer Elektrodenkappe aus einer Kupferlegierung zum Widerstandsschweißen.

Eine derartige Elektrode ist aus der DE-PS 3310423 bekannt. Elektroden dieser Art werden zum Punktschweißen von Blechen verwendet, wobei anstelle einer Punktschweißelektrode auch Rollenschweißelektroden zur Herstellung einer Schweißnaht eingesetzt werden.

In der DE-OS 2808392 wird ein Verfahren zur Herstellung einer Elektrode bzw. Elektrodenkappe für die elektrische Widerstandsschweißung beschrieben, bei der die Kupferlepierung im überalterten Zustand vorliegt. Dadurch werden die elektrische und die thermische Leitfähigkeit erhöht, um bevorzugt hochleitende Materialien, wie beispielsweise Aluminium, zu schweißen. Zur Einstellung des überalterten Zustandes wird der Werkstoff bei oder nach der Warmformgebung auf über 900°C erwärmt, daraufhin abgeschreckt und inschließend die Wärmeaushärtung durchgeführt. Der Strang wird dann kalt annähernd auf das Endmaß gezogen und inschließend bei etwa 550°C 5 Stunden geglüht.

Die DE-AS 1165876 befaßt sich mit der Verwendung einer Kupfer-Chrom-Legierung zur Herstellung von elektrisch, mechanisch und thermisch hoch beanspruchten Werkstücken. Bei diesen bekannten Verfahren wird ebenfalls eine Wärmebehandlung und eine Kaltverformung der Kupferlegierung vorgenommen.

Für Punktschweißelektroden, insbesondere hinsichtlich ihres Einsatzes in der Massenfertigung, werden hohe Standmengen gefordert. Bei den bekannten Punktschweißelektroden werden die Standmengen im wesentlichen durch an der Elektrodenoberfläche auftretende Haarrisse begrenzt, die schließlich beim Punktschweißen zu einem Verkleben der Elektrode und damit zu ihrer Unbrauchbarkeit führen. In diesem Zusammenhang ist es aus der DE-OS 2907323 auch bekannt, für das Punktschweißen von verzinkten Blechen die Elektrodenoberfläche mit einem Zinküberzug zu versehen. Durch den Zinküberzug kann zwar ein Verkleben der Elektrode mit dem zu verschweißenden Blech vermindert werden, für die Standmenge der Elektroden jedoch bleibt maßgeblich die Güte der Elektrodenoberfläche untorhalb des Zinküberzugs.

Der Erfindung liegt die Aufgabe zugrunde, ein Verfahren zur Herstellung einer Elektrode zum elektrischen Widerstandsschweißen verfügbar zu machen, deren Standmengen erheblich verbessert sind und bei denen insbesondere ein Verkleben der Oberfläche der Elektrode mit der zu schweißenden Oberfläche weitgehend vermieden wird.

Diese Aufgabe wird gemäß der Erfindung bei Verwendung einer Kupferlegierung dadurch gelöst, daß das Ausgangsmaterial zunächst einer Wärmebehandlung zur Erzielung eines feinkörnigen Gefüges mit einer Korngröße von etwa 30 bis 100 μm unterworfen wird ;

die Härte der Kupferlegierung dann mittels Kaltverformung durch Ziehen eines stangenförmigen Ausgangsmaterials unter Querschnittsverminderung erhöht wird, und

anschließend die Elektrodenkappe durch Kaltfließpressen mittels Napf-Vorwärts-und-Rückwärtspressen gefertigt wird.

Mit diesem Verfahren lassen sich Elektroden bzw. Elektrodenkappen für das elektrische Widerstandsschweißen herstellen, deren Arbeitsfläche extrem hoch verdichtet ist und damit die geforderten hohen Standmengen gewährleisten.

Weiterbildungen der Erfindung sind den Unteransprüchen zu entnehmen.

Das Wesen der Erfindung soll nachstehend anhand eines Ausführungsbeispiels näher erläutert werden.

Als Ausgangsmaterial dient eine Kupferlegierung mit 0,65 Vol.% Chrom, 0,08 Vol.% Zirkon, eventuell 0,15 Vol.% weiteren Bestandteilen und Rest Kupfer. Durch eine entsprechende Wärmebehandlung wird zunächst ein sehr feinkörniges Gefüge mit einer Korngroße von etwa 30-100 μm eingestellt. Anschließend wird das Ausgangsmaterial einer kaltverformung unterworfen, um unter Ausnutzung der hohen Kaltplastizität von Kupfer die Hirte des Materials zu erhöhen. Es hat sich als besonders günstig herausgestellt, diese Kaltverformung durch Ziehen eines stangenfönmigen Materials unter Querschnittsverminderung zu bewirken. Auf diese Weise läßt sich eine Härte von 160 bis 165 HB (HB 2,5/62,5) einstellen. Bei dem Ziehvorgang wird das Korn in Ziehrichtung, d.h. in axialer Materialrichtung, gestreckt, wodurch ein guter Faserverlauf in der Axialrichtung bei einer geringen Zeiligkeit des Faserverlaufs erreicht wird. Bereits diese Vorbehandlung ist von wesentlichem Einfluß darauf, die Legierungsneigung der hergestellten Elektrodenkappe und damit die Gefahr eines Verklebens zu vermindern.

Nach diesen Verfahrensschritten werden durch Scheren des stangenförmigen Materials in einem geschlossenen Werkzeug Scherbutzen nach vorheriger Volumenberechnung entsprechend der gewünschten Elektrodenkappengeometrie hergestellt, wobei das Gewichtsvolumen des Scherbutzens dem der fertigen Elektrodenkappe entspricht. Dazu werden die Scherbutzen zunächst in einer Matritze vorgepreßt, wobei der Stempel einen um 15% geringeren Durchmesser als der Scherbutzen aufweist. Durch diese Vorpreßstufe soll einerseits festgestellt werden, ob das Ausgangsmaterial durch die vorangegangene Warmbehandlung nicht etwa versprödet ist, um dann verworfen zu werden. Andererseits wird das durch den Abscherprozeß unebene Kopfende, das später die Arbeitsfläche der Elektrodenkappe bildet, geglättet.

Die weitere Bearbeitung und damit die Fertigstellung der vorbestimmten Geometrie erfolgt schließlich durch Napf-Vorwärts- und Rückwärtsfließpressen. Bei diesem Verfahrensschritt fließt das Material einmal in Druckrichtung des Stempels, nämlich vorwärts, und einmal entgegen den Stempelrichtung, nämlich rückwärts. Dabei werden die Fasern des vorwärtsfließenden Materials bei relativ hohen Drücken im Arbeitsflächenbereich der Elektrodenkappe umgelenkt, was auch als Faserumlenkung bezeichnet wird. Diese Faserumlenkung bewirkt eine derartige Materialverdichtung, daß sich im Arbeitsflächenbereich der Elektrodenkappe ein Härteanstieg von 15 bis 20 Brinellpunkten nachweisen läßt.

Schließlich wird die Elektrodenkappe noch einem Gleitschliffprozeß unterzogen, um noch vorhandene Unebenheiten einzuebnen. Das Gleitschleifen erfolgt bevorzugt mit Schleifkörpern, welche die Geometrie eines Tetraeders mit unterschiedlichen Seitenlängen aufweisen. Dadurch wird vermieden, daß beim Widerstandsschweißen an etwa vorstehenden Spitzen oder Kanten hohe Ströme auftreten, die den unerwünschten Anlegierungsprozeß beschleunigen.

Durch die abgestimmte Gefügestruktur in Verbindung mit der Kombination aus der Napf-Vorwärts- und Rückwärts-Fließpressen mit anschließen- der Gleitschliffbehandlung wird eine derartige Verdichtung des Materials im Arbeitsbereich der Elektrodenkappe erreicht, daß selbst unter Druck und Wärme beim Widerstandsschweißen keine Risse entlang von Korngrenzen entstehen, die zu einer Anlegierung führen können oder in unerwünschter Weise Fremdpartikel, wie Fett oder Staub, aufnehmen und damit die Elektrode unbrauchbar machen.

## Patentansprüche

1. Verfahren zum Herstellen einer Elektrode bzw. einer Elektrodenkappe aus einer Kupferlegierung zum Widerstandsschweißen mit den folgenden Verfahrensschritten :

das Ausgangsmaterial wird zunächst einer Wärmebehandlung zur Erzielung eines feinkörnigen Gefüges mit einer Korngröße von etwa 30 bis 100 μm unterworfen ;

die Härte der Kupferlegierung wird dann mittels Kaltverformung durch Ziehen eines stangenförmigen Ausgangsmaterials unter Querschnittsverminderung erhöht, und

anschließend wird die Elektrodenkappe durch Kaltfließpressen mittels Napf-Vorwärts-und-Rückwärtspressen gefertigt.

2. Verfahren nach Anspruch 1, dadurch gekennzeichnet, daß die Wärmebehandlung im Temperaturbereich von 900°C bis 1010°C durchgeführt wird.

3. Verfahren nach Anspruch 1 oder 2, dadurch gekennzeichnet, daß, durch die Kaltverformung eine Härte von 160 bis 185 HB erzielt wird (HB 2,5/62,5).

4. Verfahren nach einem der Ansprüche 1 bis 3, dadurch gekennzeichnet, daß die Elektrodenkappe vor den Napf-Vorwärts-und-Rückwärtspressen in einem geschlossenen Werkzeug als Scherbutzen vorgefertigt wird.

5. Verfahren nach Anspruch 4, dadurch gekennzeichnet, daß die Elektrodenkappe abschließend einem Gleitschliffprozeß unterzogen wird.

6. Verfahren nach einem der Ansprüche 1 bis 5, gekennzeichnet durch die Verwendung einer Kupferlegierung mit 0,65 Vol.% Chrom, 0,08 Vol.% Zirkon und Rest Kupfer.

7. Verfahren nach einem der Ansprüche 1 bis 5, gekennzeichnet durch die Verwendung einer Kupferlegierung mit 0,65 Vol.% Chrom, 0,08 Vol.% Zirkon, 0,15 % weitere Zusätze und Rest Kupfer.

## Claims

1. Method for the production of an electrode or of an electrode cap of a copper alloy for resistance welding with the following method steps :

the starting material is initially subjected to a heat treatment for the achievement of a finely grained structure with a grain size of about 30 to 100 micrometres,

the hardness of the copper alloy is then increased by means of cold working by drawing of a rod-shaped starting material with cross-sectional reduction and

the electrode cap is produced subsequently by cold press forming by means of forward and reverse cup drawing.

2. Method according to claim 1, characterised thereby, that the heat treatment is performed in a temperature range of 900°C to 1010°C.

3. Method according to claim 1 or 2, characterised thereby, that a hardness of 160 to 185 Brinell is achieved (Brinell 2.5/62.5) by cold working.

4. Method according to one of the claims 1 to 3, characterised thereby, that the electrode cap is prefabricated as shear stub in a closed tool before the forward and reverse cup drawing.

5. Method according to claim 4, characterised thereby, that the electrode cap is subsequently subjected to a slide-grinding process.

6. Method according to one of the claims 1 to 5, characterised by the use of a copper alloy with 0.65% by volume of chromium, 0.8% by volume of zirconium and copper for the remainder.

7. Method according to one of the claims 1 to 4, characterised by the use of a copper alloy with 0.65% by volume of chromium, 0.8% by volume of zirconium, 0.15% of further additives and copper for the remainder.

## Revendications

1. Procédé pour la fabrication, à partir d'un alliage de cuivre, d'une électrode, ou d'un chapeau d'électrode, pour le soudage par résistance, comportant les étapes suivantes :

le matériau de départ est d'abord soumis à un traitement thermique pour obtenir une structure à grain fin, comportant une dimension de grain d'environ 30 à 100 microns ;

la dureté de l'alliage de cuivre est ensuite augmentée par formage à froid en étirant le matériau de départ sous la forme de barres, en réduisant sa section, et

le chapeau d'électrode est ensuite achevé par extrusion à froid au moyen de presses de filage avant-arrière.

2. Procédé suivant la revendication 1, caractérisé en ce que le traitement thermique est exécuté dans un domaine de température allant de 900°C à 1010°C.

3. Procédé suivant la revendication 1 ou 2, caractérisé en ce qu'au moyen du formage à froid, on obtient une dureté de 160 à 185 HB (HB 2,5/62,5).

4. Procédé suivant l'une des revendications 1 à 3, caractérisé en ce que le chapeau d'électrode, avant le passage sur la presse de filage avant-arrière, est préfabriqué sous la forme de pions obtenus par cisaillage dans un outil fermé.

5. Procédé suivant la revendication 4, caractérisé en ce que le chapeau d'électrode est ensuite soumis à un vibro-ponçage.

6. Procédé suivant l'une des revendications 1 à 5, caractérisé par l'utilisation d'un alliage de cuivre comportant 0,65% en volume de chrome, 0,08% en volume de zirconium et le reste de cuivre.

7. Procédé suivant l'une des revendications 1 à 5, caractérisé par l'utilisation d'un alliage de cuivre comportant 0,65% en volume de chrome, 0,08% en volume de zirconium, 0,15% d'autres additions et le reste de cuivre.